(19) Europäisches Patentamt
European Patent Office
Office européen des brevets

(11) EP 2 528 006 A1

(12) **DEMANDE DE BREVET EUROPEEN**

(43) Date de publication:
**28.11.2012 Bulletin 2012/48**

(51) Int Cl.:
***G06F 21/00*** *(2006.01)*

(21) Numéro de dépôt: **12165259.8**

(22) Date de dépôt: **24.04.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **13.05.2011 FR 1154148**

(71) Demandeur: **Alcatel Lucent**
**75007 Paris (FR)**

(72) Inventeurs:
• **Kamga, Guy-Bertrand M.**
**91620 Nozay (FR)**
• **Ghorbel, Mahmoud M.**
**91620 Nozay (FR)**
• **Dupont, Marie-Pascale**
**91620 Nozay**
**(FR)**
• **Pergament, David M.**
**91620 Nozay (FR)**

(74) Mandataire: **Mouney, Jérôme**
**Alcatel-Lucent International**
**32, avenue Kléber**
**92700 Colombes (FR)**

(54) **Système et procédé de génération de politiques mutualisées de confidentialité applicables à un contenu multiutilisateur**

(57) Système (**1**) de génération de politiques mutualisées de confidentialité à appliquer à au moins un contenu multiutilisateur destiné à être publié, comprenant :
- un module (**7**) d'analyse du contenu multiutilisateur ;
- un module (**8**) d'analyse du contexte de la publication du contenu (**3**) multiutilisateur ;
- un gestionnaire (**9**) de politiques individuelles de confidentialité ;
- un sélecteur (**10**) de stratégies de combinaison de politiques de confidentialité ;
- et un générateur (**12**) de politiques mutualisées de confidentialité en fonction des stratégies sélectionnées par le sélecteur (**10**).

EP 2 528 006 A1

Printed by Jouve, 75001 PARIS (FR)

**Description**

L'invention a trait à la protection de la vie privée (*privacy*) dans les réseaux de télécommunication, et plus précisément la protection des données privées des utilisateurs (notamment domicile, santé, âge, opinions, religion, correspondance, photographies, vidéos).

Grâce à ces données privées en effet, certains fournisseurs de services recourent au profilage des utilisateurs. Ce profilage permet aux fournisseurs de personnaliser les services délivrés, notamment publicité, données de localisation, catalogue de produits et services.

Mais l'utilisation commerciale des données privées, si elle constitue, une nuisance n'est pas aussi grave que l'utilisation ciblée de données confidentielles sensibles, telle que la communication à un employeur de données relatives à la santé de l'un de ses employés, obtenues par collecte automatique.

Il est vrai que l'adoption généralisée d'environnements mutualisés en ligne tels que les outils collaboratifs et les réseaux sociaux ont conduit à un stockage exponentiel de données, associé au traitement et à l'échange de données privées des utilisateurs. Cette tendance va d'ailleurs se généraliser avec la diffusion du Web 2.0 (web sémantique), par nature collectif et collaboratif, et l'essor de partage de ressources par de nombreux utilisateurs. Citons à titre d'exemple l'outil collaboratif OSIRIS, dont une présentation est faite dans F. Trichet et Y. Nizon, « *une plateforme de développement d'espaces webs sémantiques communautaires dédiés au partage de ressources multimédia* », in Ingénierie des connaissances, Grenoble, France, 2007.

La gestion des données partagées est une question prégnante qui se pose aux utilisateurs, dont la demande est croissante de services leur permettant de contrôler la diffusion de leurs données privées.

La gestion et le contrôle de la confidentialité des données privées s'intègrent dans le cadre plus général de la gestion et du contrôle automatisés des flux d'information, fondés sur l'application de politiques. Ce type de gestion est désigné par PBM (*Policy-Based Management).*

Ordinairement, côté utilisateur, on fournit à celui-ci des moyens pour régler ses préférences quant à la confidentialité concernant ses données privées. Toutefois de nombreux contenus en ligne sont collaboratifs et impliquent le partage de données par plusieurs utilisateurs dont les approches en matière de confidentialité peuvent ne pas coïncider, voire même être contradictoires.

Le besoin existe par conséquent de fédérer des politiques individuelles de confidentialité pour le traitement de données privées contenues dans des environnements collaboratifs. Plus précisément, le besoin existe de générer des politiques de confidentialité adaptées à la gestion des données privées des contenus multiutilisateur, c'est-à-dire des contenus en relation avec plusieurs utilisateurs individuels, en fonction de critères prédéfinis :

- du contenu lui-même, notamment son type, les personnes concernées associées à leur degré implication dans le contenu, la substance, c'est-à-dire la sémantique du contenu lui-même,
- du contexte de son utilisation, notamment la disponibilité des personnes concernées, les finalités de la publication du contenu, l'audience visée,
- les politiques de confidentialité individuelles des personnes impliquées dans la génération du contenu, ou encore des personnes concernées ou touchées par la publication.

Pour une définition précise des critères associés aux documents numériques, cf. J. Rouillard et al. dans « La plasticité des documents numériques », Revue Technique et Science Informatiques, Paris, Vol. 25, n°4/2006.

M. Buffa, C. Faron Zucker et A. Kolomoyskaya ont quant à eux proposé une approche de la gestion des droits d'accès pour les systèmes de gestion des contenus reposant sur les modèles et techniques du web sémantique dans « Gestion sémantique des droits d'accès au contenu : l'ontologie AMO », in Revue des nouvelles technologies de l'information, vol. RNTI-E-19, pp. 471-482, 2010.

L'application de politiques de confidentialité peut être déléguée par l'utilisateur à un agent distant. Cette approche, dénommée « Trusted Computing » et analysée notamment par G. Piolle et Y. Demazeau dans « Délégation d'agents pour la protection étendue des données personnelles », in JFSMA, 21 octobre 2009, et dans « Une architecture pour la protection des données personnelles », in Revue d'Intelligence n°24 pp. 695-715, Octobre 2010, n'est pas nécessairement à même de garantir un parfait respect de la vie privée de l'utilisateur, si l'on en croit les auteurs.

Il existe par ailleurs un langage dédié au contrôle d'accès, à la circulation des règles et à l'administration des politiques de confidentialités : XACML (OASIS eXtensible Access Control Markup Language), qui fournit un mécanisme permettant d'appliquer plusieurs politiques indépendantes à une ressource partagée en supportant différents algorithmes combinés (notamment *Permit-override*, *Denyoverride*, *First-applicable* et *Only-one-applicable*), ayant chacun pour fonction de combiner des décisions multiples pour générer une décision unique. Cependant il s'avère que les décisions ainsi générées (notamment : Permettre, Refuser, Inapplicable ou Indéterminable) peuvent être contradictoires.

C.A. Ardagna et al. proposent dans « An XACML-Based Privacy-centered Access Control System », WISG-09, nov. 2009, une solution basée sur XACML permettant d'entamer un dialogue avec un utilisateur demandant un accès à une ressource, de lui indiquer l'absence d'une information nécessaire à l'évaluation de la politique de confidentialité, de l'autoriser à la fournir et de lui permettre ensuite d'accéder avec succès à la ressource. Mais cette solution ne résout pas les difficultés posées par la mécanique combinatoire de l'XACML génératrice de contradictions potentielles dans les politiques de confidentialité.

Cependant, la combinaison de décisions multiples obtenues après l'évaluation de chaque politique de confidentialité individuelle, comme mentionnée ci-dessus, peut conduire à des décisions indéterminées ou inapplicables. Il est alors nécessaire de clarifier l'indétermination ou de combiner toutes les politiques de confidentialités individuelles dans une unique politique de confidentialité cohérente.

F. Huonder propose dans son mémoire de Master intitulé « Conflict Detection and Resolution of XACML Policies », University of Applied Sciences Rapperswil (Switzerland), july 2010, une solution pour résoudre les conflits entre plusieurs politiques XACML. Toutefois, cette solution s'appuie sur un mécanisme de précédence qui oblige l'utilisateur à définir au préalable des relations de précédence entre les politiques en conflit. Bien que cette solution puisse être jugée adéquate pour gérer des politiques de contrôle d'accès ou de sécurité où un administrateur peut objectivement et facilement spécifier des relations de précédence entre les politiques, elle se révèle inadaptée pour résoudre les conflits entre des politiques individuelles de confidentialité où les exigences de confidentialité de chaque personne doivent être respectées. En effet, cela reviendrait à dire que les politiques de confidentialité de certaines personnes sont prioritaires sur d'autres, ce qui pourra avoir pour conséquence le non respect des politiques de confidentialité des personnes jugées moins prioritaires.

De même, Burghardt et al. proposent, dans « PRIMO : Towards Privacy Aware Image Sharing », in IEEE/WIC/ACM International Conference on Web Intelligence and Intelligent Agent Technology, 2008, un système programmé pour détecter la violation, par une image publiée au sein d'un environnement de partage photographique, les règles de confidentialité d'individus identifiés dans l'image, mais la solution proposée a l'inconvénient d'appliquer systématiquement la règle la plus restrictive lorsque des individus présents sur les photographies partagées ont des règles contradictoires.

On le voit, les solutions existantes ne permettent pas de fédérer de manière satisfaisante les politiques de confidentialité d'utilisateurs multiples dans les environnements partagés.

Un premier objet est de contribuer à une meilleure gestion de la confidentialité sur les plateformes donnant accès à des contenus multiutilisateur.

Un deuxième objet est de faciliter la génération de politiques mutualisées de confidentialité évitant les conflits entre politiques de confidentialité individuelles.

Un troisième objet est de générer de telles politiques en évitant de recourir au plus petit dénominateur commun.

A cet effet, il est proposé, selon un premier aspect, un procédé de génération d'au moins une politique mutualisée de confidentialité à appliquer à au moins un contenu multiutilisateur destiné à être publié, **caractérisé en ce qu'**il comprend les opérations suivantes :

- analyser des métadonnées associées au contenu multiutilisateur ;
- analyser le contexte de la publication du contenu multiutilisateur ;
- analyser chaque politique individuelle de confidentialité associée à chacun des utilisateurs d'au moins un groupe d'utilisateurs du contenu multiutilisateur ;
- sélectionner une stratégie de combinaison des politiques individuelles de confidentialité parmi des stratégies de combinaison prédéterminées ;
- générer au moins une politique mutualisée de confidentialité en appliquant la stratégie de combinaison sélectionnée.

Ce procédé peut en outre comprendre :

- une opération de classification de conflits entre des politiques individuelles de confidentialité, l'opération de sélection d'une stratégie de combinaison étant réalisée en fonction du contenu de cette liste.
- en l'absence de politique individuelle de confidentialité pour un utilisateur, une opération de sélection d'une politique individuelle par défaut au sein d'une base de données de politiques individuelles de confidentialité par défaut.
- une opération d'adaptation des politiques individuelles de confidentialité au contenu multiutilisateur.
- une opération de mémorisation des politiques individuelles de confidentialité adaptées dans une base de données de politiques de confidentialité partagées.
- une opération de récupération d'informations personnelles détaillées relatives aux utilisateurs du contenu multiutilisateur et aux personnes concernées par celui-ci.

Selon un deuxième aspect, il est proposé un produit programme d'ordinateur implémenté sur un support mémoire, susceptible d'être mis en oeuvre au sein d'une unité de traitement informatique et comprenant des instructions pour la mise en oeuvre de ce procédé.

Il est proposé, selon un troisième aspect, un système de génération de politiques mutualisées de confidentialité à appliquer à au moins un contenu multiutilisateur destiné à être publié, **caractérisé en ce qu'**il comprend :

- un module d'analyse du contenu multiutilisateur ;
- un module d'analyse du contexte de la publication du contenu multiutilisateur ;
- un gestionnaire de politiques individuelles de confidentialité ;

- un sélecteur de stratégies de combinaison de politiques de confidentialité ;
- et un générateur de politiques mutualisées de confidentialité.

Le système peut en outre comprendre :

- une base de données de politiques individuelles de confidentialité par défaut ;
- une base de données de politiques de confidentialité partagées ;
- un gestionnaire d'identités individuelles.

D'autres objets et avantages de l'invention apparaîtront à la lumière de la description d'un mode préféré de réalisation, faite ci-après en référence aux dessins annexés dans lesquels :

- la figure 1 est un schéma représentant l'architecture d'un système de génération d'une politique mutualisée de confidentialité.
- la figure 2 est un diagramme expliquant différentes étapes d'un procédé de génération d'une politique mutualisée de confidentialité ;

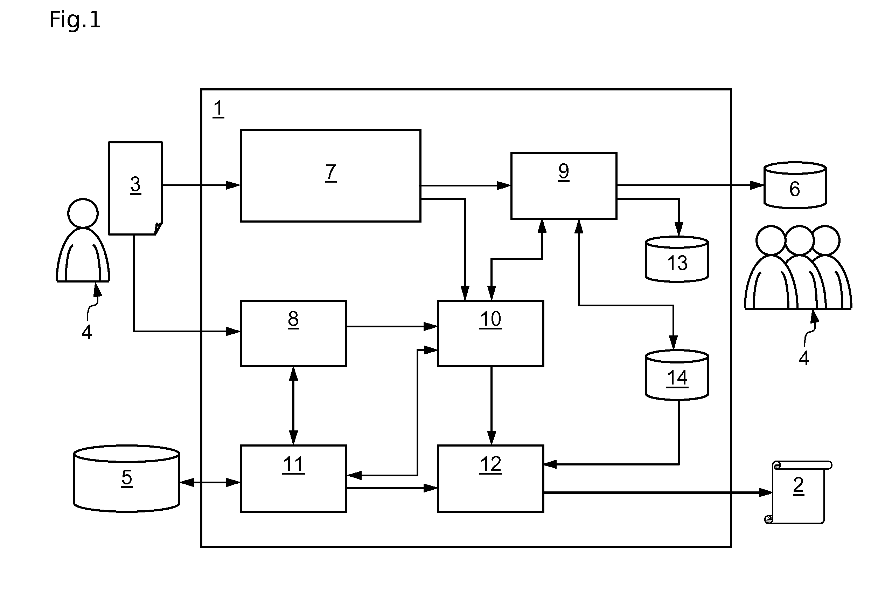

Sur la figure 1 est représenté un système **1** de génération de politiques mutualisées **2** de confidentialité à appliquer à des contenus **3** multiutilisateur. Ce système **1** est par exemple implémenté sous forme d'un programme informatique au sein d'un serveur de services relié à un réseau de télécommunications (LAN, MAN ou WAN tel qu'Internet).

Le système **1** est alimenté en entrée avec :

- des contenus **3** que des utilisateurs **4** souhaitent partager en vue de leur divulgation à des tiers via un éditeur (en direct à une personne ou un groupe, ou à partager avec des cercles d'amis ou de collègues, etc.). Ces contenus **3**, destinés à circuler sur un réseau de télécommunication au sein de plateformes de partage, peuvent notamment se présenter sous la forme de documents (texte, photographie, vidéo, etc.) ;
- des données relatives à chaque utilisateur **4**, issues d'une base de données **5** de profils individuels et collectifs des utilisateurs **4** ;
- des politiques individuelles de confidentialité applicables aux utilisateurs **4**, lorsqu'elles sont disponibles, issues d'une base de données **6** de politiques individuelles de confidentialité.

En sortie, le système **1** produit une ou plusieurs politiques mutualisées **2** de confidentialité associées aux contenus **3** ainsi partagés.

Le système **1** comprend les éléments fonctionnels interconnectés suivants :

- un analyseur **7** de contenu multiutilisateur ;

- un analyseur **8** contextuel ;
- un gestionnaire **9** de politiques individuelles de confidentialité ;
- un sélecteur **10** de stratégies de combinaison de politiques de confidentialité ;
- un gestionnaire **11** d'identités individuelles ;
- un générateur **12** de politiques mutualisées de confidentialité ;
- une base de données **13** de politiques individuelles de confidentialité par défaut ;
- une base de données **14** de politiques de confidentialité partagées ;

L'analyseur **7** de contenu multiutilisateur est un module logiciel programmé pour analyser des métadonnées associées à un contenu **3** partagé annoté, de manière à identifier les informations qui joueront un rôle clé dans la sélection des critères de combinaison par le sélecteur **10,** comme nous le verrons ci-après. Parmi les informations analysées, citons :

- les propriétés du contenu **3,** notamment le type et la nature du contenu **3** (par exemple un document textuel, une image, une vidéo),
- l'information sémantique du contenu **3** (ou de parties seulement du contenu **3),** notamment la nature d'un évènement, la date et le lieu de son occurrence,
- les personnes supposées concernées par l'application d'une politique de confidentialité au contenu **3** (pas seulement les utilisateurs **3** mais également les personnes apparaissant au sein d'une image, ou encore celles dont des informations personnelles sont citées dans le contenu **3),** et leur niveau d'implication dans le contenu **3** (par ex. le taux d'occupation d'une image, le nombre d'informations personnelles identifiables dans un document).

L'analyseur **7** de contenu multiutilisateur peut effectuer une analyse directe des métadonnées du contenu **3** annoté, ou collaborer de manière automatisée avec des outils existants d'annotation de contenu sémantique. Citons à titre d'exemple l'application ImageNotion qui détecte le visage, le genre et l'humeur d'une personne dans un contenu (cf. A. Walter et G. Nagypal, « IMAGENOTION - Collaborative semantic annotation of images and image parts and work integrated creation of ontologies », in Proc. of 1 st Conference on Social Semantic Web (CSSW), Leipzig, Allemagne, 2008).

L'analyseur **7** de contenu est par ailleurs programmé pour effectuer, dans le contenu **3** multiutilisateur, un indexage d'une position de toute information décrétée privée ou sensible, ou d'une zone dans laquelle se trouve cette information (par ex. une information personnelle identifiable, un lieu, un évènement, une date, etc.), et pour donner à l'éditeur du contenu **3** multiutilisateur la possibilité de hiérarchiser chaque information privée ou sensible, c'est-à-dire le degré d'importance de l'information (typiquement : haute, moyenne, basse) qui apparaîtra dans la publication.

L'analyseur **8** contextuel est un module logiciel programmé pour collecter et analyser des informations relatives au contexte de publication du contenu **3** multiutilisateur, en vue de la sélection ultérieure de critères de combinaison de politiques, comme nous le verrons ci-après. Parmi les informations relatives au contexte de publication du contenu, citons :

- la nature de la personne à l'initiative de la publication du contenu **3** multiutilisateur (notamment le propriétaire d'une information, ou encore la personne concernée par la confidentialité) ;
- l'environnement dans lequel le contenu **3** multiutilisateur sera publié (messagerie électronique, espace de partage public ou à accès limité, réseau social, etc.) ;
- la finalité de la divulgation, c'est-à-dire les intentions de l'éditeur ou ce que celui-ci souhaite mettre en exergue dans le contenu **3** (le contenu **3** dans son ensemble, une partie seulement du contenu **3** ou encore un évènement en lien avec le contenu **3**) ;
- l'audience potentielle (par ex. le nombre et/ou la qualité des destinataires potentiels) ;
- la disponibilité des personnes concernées et les moyens disponibles pour les contacter ;
- Le délai de publication effective présumé acceptable par l'éditeur.

On comprend aisément que certaines des informations relatives au contexte de la publication du contenu **3** peuvent être détectées de manière automatique par l'analyseur **8** contextuel, tandis que d'autres nécessitent une requête adressée à l'éditeur, l'information étant alors contenue dans sa réponse.

Le gestionnaire **9** de politiques individuelles de confidentialité est un module logiciel relié :

- à l'analyseur **7** de contenu multiutilisateur,
- au sélecteur **10** de stratégies de combinaison de politiques de confidentialité,
- à la base de données **6** de politiques individuelles de confidentialité,
- à la base de données **13** de politiques individuelles de confidentialité par défaut,
- et à la base de données **14** de politiques de confidentialité partagées.

Le gestionnaire **9** de politiques individuelles de confidentialité est programmé pour :

- collecter et analyser, lorsqu'elles sont disponibles, les politiques individuelles de confidentialité de chaque individu impliqué dans le contenu multiutilisateur, issues de la base de données **6** de politiques individuelles de confidentialité ; si aucune politique n'est définie pour un utilisateur, le gestionnaire **9** de politiques individuelles de confidentialité extrait de la base de données **13** de politiques individuelles de confidentialité par défaut une politique individuelle par défaut, prédéfinie, qu'il associe à l'utilisateur dépourvu de politique individuelle de confidentialité ;
- adapter les politiques individuelles de confidentialité au contenu **3** multiutilisateur, et
- mémoriser les politiques individuelles ainsi adaptées dans la base de données **14** de politiques de confidentialité partagées ;
- analyser les politiques individuelles de confidentialité pour vérifier si ces politiques sont contradictoires ou conflictuelles ;
- dans l'hypothèse d'une contradiction ou d'un conflit entre politiques individuelles, interroger le sélecteur **10** de stratégies de combinaison de politiques de confidentialité pour gérer le conflit (cf. ci-après).

Le gestionnaire **9** de politiques individuelles de confidentialité est programmé pour dialoguer avec les utilisateurs **4,** et notamment pour :

- fournir aux utilisateurs **4** des informations relatives au contexte de la publication (notamment l'identité de l'éditeur, la finalité de la publication, le type d'environnement, l'audience potentielle, etc.),
- indiquer aux utilisateurs **4** l'occurrence d'un conflit de politiques individuelles de confidentialité, et leur indiquer les parties de leurs politiques individuelles de confidentialité concernées par le conflit, de manière à les aider à prendre une décision adéquate ;
- proposer un compromis lorsque des politiques individuelles de confidentialité apparaissent en conflit sur un contenu **3** à divulguer, en employant à cet effet une stratégie orientée vers le compromis entre politiques individuelles de confidentialité conflictuelles.

Le gestionnaire **11** d'identités individuelles est un module logiciel programmé pour récupérer des informations personnelles détaillées relatives aux utilisateurs du contenu **3** et aux personnes concernées par celui-ci, informations nécessaires à la génération d'une politique mutualisée de confidentialité. Le gestionnaire **11** d'identités individuelles et relié au sélecteur **10** de stratégies de combinaison auquel il communique les données collectées.

Le sélecteur **10** de stratégies de combinaison de politiques de confidentialité est programmé pour sélectionner une stratégie de combinaison de politiques en exploitant les informations qui lui sont communiquées par l'analyseur **7** de contenu, l'analyseur **8** contextuel, le gestionnaire **9** de politiques individuelles de confidentialité et le gestionnaire **11** d'identités individuelles.

Les stratégies de combinaison peuvent comprendre :

- une stratégie de combinaison orientée vers un compromis entre politiques individuelles, auquel cas le système **1** négocie avec les personnes concernées pour trouver une solution aux éventuels conflits entre les politiques individuelles de confidentialité, par exemple lorsque l'éditeur a manifesté le souhait de subordonner une publication de l'ensemble du contenu à une négociation entre politiques conflictuelles, ou lorsque les individus dont les politiques de confidentialité sont violées sont disponibles ;

- une stratégie de combinaison orientée vers la transformation du contenu **3,** aux fins d'éliminer les conflits entre les politiques individuelles de confidentialité (par ex. dans l'hypothèse où des parties du contenu 3 qui causent le conflit ne sont pas significatives dans la publication, ou lorsque le nombre d'individus affectés par le conflit est faible), auquel cas le sélecteur **10** de stratégies suggère une ou plusieurs transformations à apporter au contenu **3** ;

- une combinaison des stratégies précédentes, le sélecteur **10** de stratégies appliquant à la fois une méthode de négociation entre polices individuelles de confidentialité et une transformation du contenu **3** de manière à résoudre les conflits entre politiques individuelles de confidentialité, notamment lorsque certains individus sont disponibles ou ouverts à la négociation et d'autres non.

Le générateur **12** de politiques mutualisées de confidentialité est un module logiciel relié au sélecteur **10** de stratégies de combinaison de politiques de confidentialité, programmé pour appliquer la stratégie sélectionnée par celui-ci pour définir la politique mutualisée de confidentialité à appliquer au contenu **3** multiutilisateur.

Le générateur **12** de politiques mutualisées de confidentialité applique une méthode de réconciliation entre politiques individuelles de confidentialité contradictoires ou conflictuelles en effectuant une analyse de compromis entre elles de manière à trouver un compromis entre les personnes impliquées, ou à suggérer une transformation qui pourrait (ou devrait) être appliquée au contenu **3** pour respecter les politiques de confidentialité décrétées mineures en ce qui concerne par exemple le degré d'implication des personnes concernées ou visées, la finalité de la divulgation, ou encore la disponibilité des personnes.

Le générateur **12** de politiques mutualisées établit alors une politique mutualisée de confidentialité résultante, à appliquer au contenu multiutilisateur, sous forme soit d'un compromis entre les politiques individuelles de confidentialité des individus concernés ou visés, c'est-à-dire une politique de confidentialité qui satisfasse l'ensemble de ces individus, soit la somme d'une politique réalisant à la fois un compromis entre les politiques individuelles de certains individus et une liste de transformations (faisant partie intégrante des obligations de la politique mutualisée de confidentialité) à appliquer au contenu **3** de manière à satisfaire les politiques individuelles de confidentialité ignorées par le compromis.

Ces transformations sont intégrées aux obligations de la politique mutualisée de confidentialité, et peuvent consister en :

- un filtrage ou la suppression d'une information dans un document (notamment la position d'un index donné, un segment, etc.) ;
- l'anonymisation d'une information dans un document ;
- le floutage d'une zone dans une image (par ex. un visage, un monument, une information relative à un évènement tel qu'un nom, un lieu, une date, etc.) ;
- le retrait d'une séquence vidéo.

Afin de garantir l'application effective de la politique mutualisée de confidentialité ainsi générée, cette politique est de préférence associée au contenu **3** multiutilisateur en utilisant des mécanismes d'association tel que XMP (eXtensible Metadata Platform), lequel a l'avantage d'être supporté par plusieurs formats de contenu (notamment PDF, JPEG, PNG).

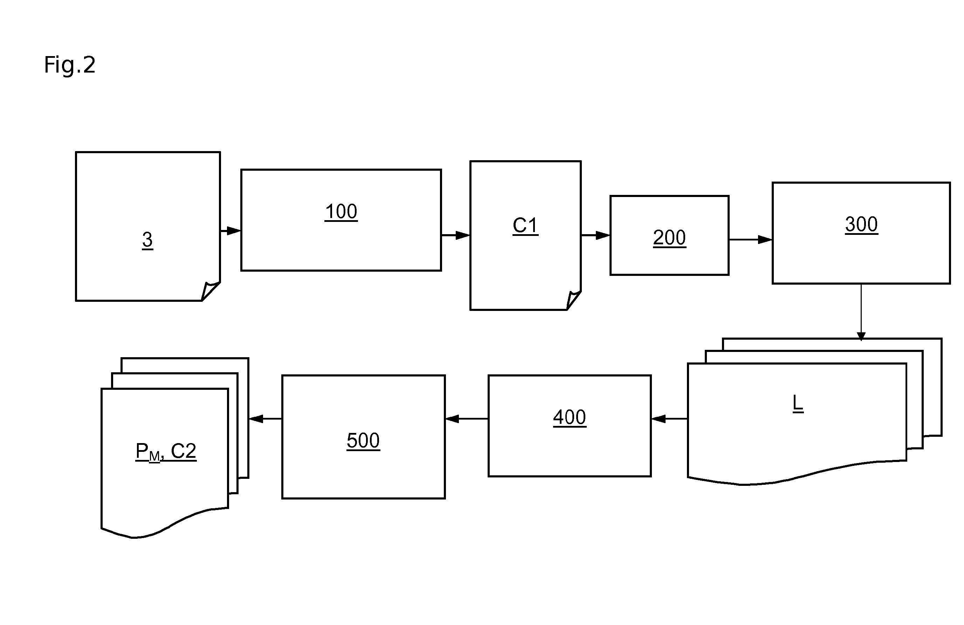

On résume ci-après, en référence au diagramme de la figure 2, le procédé de génération d'une politique mutualisée de confidentialité, tel que mis en oeuvre par le système **1** qui vient d'être décrit.

On suppose par hypothèse qu'est disponible un contenu **3** multiutilisateur auquel sont associés des politiques individuelles de confidentialité contradictoires, ou au minimum conflictuelles.

Une première opération **100** consiste pour l'analyseur **7** de contenu multiutilisateur à identifier, classer et indexer les informations présumées confidentielles ou sensibles notées $PS_1$, $PS_{2,...}$ $PS_n$. où n est un nombre entier strictement positif.

L'analyseur **7** de contenu multiutilisateur génère ainsi un ensemble **C** d'informations présumées confidentielles ou sensibles :

$$C = \{PSI_1, PSI_2, ..., PSI_n\}.$$

Une deuxième opération **200** consiste pour l'analyseur **8** de contexte à analyser le contexte de la divulgation.

Une troisième opération **300** consiste pour le gestionnaire de politiques individuelles de confidentialité à évaluer les politiques individuelles de confidentialité de manière à identifier et classifier les conflits.

Il en résulte une liste **L** de conflits classifiés (autorisations contradictoires, obligations incohérentes, etc.).

Une quatrième opération **400** consiste, pour le sélecteur **10** de stratégies de combinaison de politiques de confidentialité, à sélectionner une stratégie de combinaison de politiques de confidentialité en fonction du contenu de la liste L des conflits classifiés.

Une cinquième opération **500** consiste, pour le générateur **12** de politiques mutualisées de confidentialité, à générer une ou plusieurs politiques mutualisées de confidentialité en appliquant la stratégie sélectionnée par le sélecteur **10** de stratégies de combinaison de politiques de confidentialité.

Il en résulte une politique $P_M$ mutualisée de confidentialité proposée aux utilisateurs **4,** ou une liste **C2** (qui peut être ordonnée) de politiques mutualisées de confidentialité, pouvant être appliquée au contenu **3** multiutilisateur et éliminant les conflits entre les politiques individuelles de confidentialité.

Le système **1** et le procédé permettent ainsi d'appliquer à un contenu multiutilisateur une politique unitaire et mutualisée de confidentialité, intégrant des solutions de compromis entre politiques individuelles de confidentialité, plutôt que de combiner des décisions multiples après avoir effectué une évaluation de chaque politique individuelle de confidentialité. Cette solution présente l'avantage de permettre une simplification de l'application des politiques de confidentialité à un contenu multiutilisateur, et une amélioration de la robustesse, de la fiabilité et de l'efficacité des politiques de confidentialité appliquées aux contenus multiutilisateurs.

Il n'est pas nécessaire de recourir au plus petit dénominateur commun des politiques individuelles de confidentialité.

Les conflits entre politiques de confidentialité individuelles sont minimisés ou évités.

La gestion de la confidentialité sur les plateformes donnant accès à des contenus multiutilisateur est ainsi améliorée.

## Revendications

1. Procédé de génération d'au moins une politique mutualisée de confidentialité à appliquer à au moins un contenu **(3)** multiutilisateur destiné à être publié, **caractérisé en ce qu'**il comprend les opérations suivantes :

       - analyser des métadonnées associées au contenu **(3)** multiutilisateur ;
       - analyser le contexte de la publication du contenu **(3)** multiutilisateur ;
       - analyser chaque politique individuelle de confidentialité associée à chacun des utilisateurs **(4)** d'au moins un groupe d'utilisateurs du contenu **(3)** multiutilisateur ;
       - sélectionner une stratégie de combinaison des politiques individuelles de confidentialité parmi des stratégies de combinaison prédéterminées ;
       - générer au moins une politique mutualisée de confidentialité à appliquer au contenu **(3)** multiutilisateur en appliquant la stratégie de combinaison sélectionnée.

2. Procédé selon la revendication **1, caractérisé en ce qu'**il comprend une opération de classification de conflits entre des politiques individuelles de confidentialité, et **en ce que** l'opération de sélection d'une stratégie de combinaison est réalisée en fonction du contenu de cette liste.

3. Procédé selon la revendication **1** ou la revendication **2, caractérisé en ce qu'**il comprend, en l'absence de politique individuelle de confidentialité pour un utilisateur, une opération de sélection d'une politique individuelle par défaut au sein d'une base de données **(13)** de politiques individuelles de confidentialité par défaut.

4. Procédé selon l'une des revendications **1** à **3, caractérisé en ce qu'**il comprend une opération d'adaptation des politiques individuelles de confidentialité au contenu **(3)** multiutilisateur.

5. Procédé selon la revendication **4, caractérisé en ce qu'**il comprend une opération de mémorisation des politiques individuelles de confidentialité adaptées dans une base de données **(14)** de politiques de confidentialité partagées.

6. Procédé selon l'une des revendications précédentes, **caractérisé en ce qu'**il comprend une opération de récupération d'informations personnelles détaillées relatives aux utilisateurs du contenu **(3)** multiutilisateur et aux personnes concernées par celui-ci.

7. Produit programme d'ordinateur implémenté sur un support mémoire, susceptible d'être mis en oeuvre au sein d'une unité de traitement informatique et comprenant des instructions pour la mise en oeuvre d'un procédé selon l'une des revendications **1** à **6.**

8. Système **(1)** de génération de politiques mutualisées de confidentialité à appliquer à au moins un contenu multiutilisateur destiné à être publié, **caractérisé en ce qu'**il comprend :

       - un module **(7)** d'analyse du contenu multiutilisateur ;
       - un module **(8)** d'analyse du contexte de la publication du contenu **(3)** multiutilisateur ;
       - un gestionnaire **(9)** de politiques individuelles de confidentialité ;
       - un sélecteur **(10)** de stratégies de combinaison de politiques de confidentialité ;
       - et un générateur **(12)** de politiques mutualisées de confidentialité en fonction des stratégies sélectionnées par le sélecteur **(10).**

9. Système selon la revendication **8, caractérisé en ce qu'**il comprend en outre :

**EP 2 528 006 A1**

- une base de données **(13)** de politiques individuelles de confidentialité par défaut ;
- une base de données **(14)** de politiques de confidentialité partagées.

**10.** Système **(1)** selon la revendication **8** ou la revendication **9, caractérisé en ce qu'**il comprend en outre un gestionnaire **(11)** d'identités individuelles.

Fig.1

Fig.2

3 → 100 → C1 → 200 → 300 → L → 400 → 500 → P_M, C2

# EP 2 528 006 A1

Europäisches
Patentamt

European
Patent Office

Office européen
des brevets

## RAPPORT DE RECHERCHE EUROPEENNE

Numéro de la demande

EP 12 16 5259

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | Florian Hounder: "Conflict Detection and Resolution of XACML Policies", , 1 juillet 2010 (2010-07-01), pages 1-82, XP055016753, Extrait de l'Internet: URL:http://www.herasaf.org/uploads/theses/2010/2010_Conflict_Detection_and_Resolution_of_XACML_Policies.pdf [extrait le 2012-01-17] * le document en entier * ----- | 1-10 | INV. G06F21/00 |
| X,D | BURGHARDT T ET AL: "PRIMO - Towards Privacy Aware Image Sharing", WEB INTELLIGENCE AND INTELLIGENT AGENT TECHNOLOGY, 2008 IEEE/WIC/ACM INTERNATIONAL CONFERENCE ON, IEEE, PISCATAWAY, NJ, USA, 9 décembre 2008 (2008-12-09), pages 21-24, XP031403116, ISBN: 978-0-7695-3496-1 * le document en entier * ----- | 1-10 | |
| X,D | Francky Trichet ET AL: "Une plateforme de développement d'espaces webs sémantiques communautaires dédiés au partage de ressources multimédia", 18es Journées Francophones d'Ingénierie des Connaissances, Grenoble : France (2007), 16 août 2010 (2010-08-16), pages 301-312, XP055016521, Extrait de l'Internet: URL:http://hal.archives-ouvertes.fr/docs/00/50/98/62/PDF/Trichet_Nizon.pdf [extrait le 2012-01-13] * le document en entier * ----- | 1-10 | DOMAINES TECHNIQUES RECHERCHES (IPC) G06F |

Le présent rapport a été établi pour toutes les revendications

| Lieu de la recherche | Date d'achèvement de la recherche | Examinateur |
|---|---|---|
| La Haye | 15 octobre 2012 | Alecu, Mihail |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

11

**Europäisches Patentamt**

**European Patent Office**

**Office européen des brevets**

**RAPPORT DE RECHERCHE EUROPEENNE**

Numéro de la demande

EP 12 16 5259

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | Florian Hounder: "Conflict Detection and Resolution of XACML Policies", , 1 juillet 2010 (2010-07-01), pages 1-82, XP055016753, Extrait de l'Internet: URL:http://www.herasaf.org/uploads/theses/2010/2010_Conflict_Detection_and_Resolution_of_XACML_Policies.pdf [extrait le 2012-01-17] * le document en entier * ----- | 1-10 | INV. G06F21/00 |
| X,D | BURGHARDT T ET AL: "PRIMO - Towards Privacy Aware Image Sharing", WEB INTELLIGENCE AND INTELLIGENT AGENT TECHNOLOGY, 2008 IEEE/WIC/ACM INTERNATIONAL CONFERENCE ON, IEEE, PISCATAWAY, NJ, USA, 9 décembre 2008 (2008-12-09), pages 21-24, XP031403116, ISBN: 978-0-7695-3496-1 * le document en entier * ----- | 1-10 | |
| X,D | Francky Trichet ET AL: "Une plateforme de développement d'espaces webs sémantiques communautaires dédiés au partage de ressources multimédia", 18es Journées Francophones d'Ingénierie des Connaissances, Grenoble : France (2007), 16 août 2010 (2010-08-16), pages 301-312, XP055016521, Extrait de l'Internet: URL:http://hal.archives-ouvertes.fr/docs/00/50/98/62/PDF/Trichet_Nizon.pdf [extrait le 2012-01-13] * le document en entier * ----- | 1-10 | |

**DOMAINES TECHNIQUES RECHERCHES (IPC)**

G06F

Le présent rapport a été établi pour toutes les revendications

| Lieu de la recherche | Date d'achèvement de la recherche | Examinateur |
|---|---|---|
| La Haye | 15 octobre 2012 | Alecu, Mihail |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

**EP 2 528 006 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **J. ROUILLARD et al.** La plasticité des documents numériques. *Revue Technique et Science Informatiques, Paris,* 2006, vol. 25 (4
- Gestion sémantique des droits d'accès au contenu : l'ontologie AMO. *Revue des nouvelles technologies de l'information,* 2010, vol. 19, 471-482
- **G. PIOLLE ; Y. DEMAZEAU.** Délégation d'agents pour la protection étendue des données personnelles. *JFSMA,* 21 Octobre 2009
- Une architecture pour la protection des données personnelles. *Revue d'Intelligence n°24,* Octobre 2010, 695-715
- **C.A. ARDAGNA et al.** An XACML-Based Privacy-centered Access Control System. *WISG,* 09 Novembre 2009
- **F. HUONDER.** *Conflict Detection and Resolution of XACML Policies,* Juillet 2010
- **BURGHARDT et al.** PRIMO : Towards Privacy Aware Image Sharing. *IEEE/WIC/ACM International Conference on Web Intelligence and Intelligent Agent Technology,* 2008
- **A. WALTER ; G. NAGYPAL.** IMAGENOTION - Collaborative semantic annotation of images and image parts and work integrated creation of ontologies. *Proc. of 1 st Conference on Social Semantic Web (CSSW), Leipzig, Allemagne,* 2008